# EUROPÄISCHE PATENTSCHRIFT

(11) **EP 3 328 563 B1**
(45) Veröffentlichungstag und Bekanntmachung des Hinweises auf die Patenterteilung: **12.12.2018**
(21) Anmeldenummer: 16744396.9
(22) Anmeldetag: 27.07.2016
(51) Int. Cl.: B21B 31/07

(54) **WALZGERÜST ZUM WALZEN VON WALZGUT**
ROLLING STAND FOR THE ROLLING OF ROLLING STOCK
CAGE DE LAMINAGE DESTINÉE AU LAMINAGE D'UNE PIÈCE À LAMINER

(30) Priorität: 31.07.2015 DE 102015214642; 30.11.2015 DE 102015223690
(43) Veröffentlichungstag der Anmeldung: 06.06.2018
(73) Patentinhaber: SMS Group GmbH, 40237 Düsseldorf (DE)
(72) Erfinder: ALKEN, Johannes, 57076 Siegen (DE); KNIE, Daniel, 57258 Freudenberg (DE)
(74) Vertreter: Kross, Ulrich
(86) Internationale Anmeldenummer: PCT/EP2016/067898
(87) Internationale Veröffentlichungsnummer: WO 2017/021250

(56) Entgegenhaltungen:
- EP-A1- 1 863 603
- WO-A1-2013/048836
- DE-A1-102012 224 511
- US-A- 3 453 031

## Beschreibung

Die Erfindung betrifft ein Walzgerüst zum Walzen von vorzugsweise metallischem Walzgut.

Derartige Walzgerüste sind im Stand der Technik grundsätzlich bekannt, z. B. aus der WO 2013/048836 A1. Das dort offenbarte Walzgerüst zum Walzen von metallischem Walzgut offenbart eine Walze mit zwei Walzenzapfen, die jeweils in einem Einbaustück, auch Lagergehäuse genannt, drehbar gelagert sind. Hier erfolgt die Lagerung der Walzenzapfen in hoch belasteten Gerüsten in jeweils einem zylinderförmigen Aufnahmeraum in dem Einbaustück, wobei der Aufnahmeraum der Einbaustücke im Bereich maximaler Last mindestens einen Hochdruckzulauf, typischerweise auch mit hydrostatischen Taschen, für Kühl- und/oder Schmiermittel in den Aufnahmeraum aufweist. Darüber hinaus weist das bekannte Walzgerüst eine einlaufseitig an einen Niederdruckkreislauf für das Kühl- und/oder Schmiermittel angeschlossene Hochdruckpumpe auf. Diese ist oben auf dem Walzgerüst montiert und bedient von dort aus über Hochdruckleitungen den Hochdruckzulauf der Einbaustücke mit unter hohem Druck stehenden Kühl- und/oder Schmiermittel. Der Hochdruckzulauf ist an der Wandung des Aufnahmeraumes bzw. in der Wandung einer Lagerbuchse des Einbaustücks im Bereich maximaler Belastung angeordnet.

Der besagte Niederdruckkreislauf für das Kühl- und/oder Schmiermittel umfasst eine Niederdruckpumpe und einen Tank für das Kühl- oder Schmiermittel, welche beide typischerweise unterhalb des Walzgerüstes angeordnet sind. Niederdruckleitungen, welche typischerweise an den Ständerfenstern des Walzgerüstes entlanggeführt sind, verbinden die Niederdruckpumpe mit den Niederdruckzuläufen in dem Aufnahmeraum des Einbaustücks für den Walzenzapfen, wobei diese Niederdruckzuläufe typischerweise auch auf 90° und 270° Positionen am Umfang des Aufnahmeraumes verteilt angeordnet sind. Die Versorgung des Aufnahmeraums bzw. des Ringspaltes zwischen dem Einbaustück und dem darin gelagerten Walzenzapfen mit Kühl- und/oder Schmiermittel unter Niederdruck, d. h. beispielsweise 2 bar, ist in der Regel ausreichend für eine Schmierung des Walzenzapfens bei geringer Walzkraft.

Bei großer Walzkraft, wie sie insbesondere in den ersten Gerüsten einer Walzstraße auftreten, ist der Niederdruck jedoch in der Regel nicht ausreichend, um eine Separation, d. h. ein Abheben des Walzenzapfens von dem Einbaustück bzw. der Lagerbuchse im Walzbetrieb zu realisieren; dies hat zur Folge, dass der drehende Walzenzapfen das Einbaustück bzw. die Lagerbuchse kontaktiert und bei (seiner) Drehung an der Innenseite des Aufnahmeraumes entlangreibt. Die Folge ist ein unerwünschter Verschleiß von sowohl der Lagerbuchse wie auch des Zapfens bzw. der Zapfenbuchse. Um dies zu verhindern, sieht der Stand der Technik die besagte Hochdruckpumpe vor, welche eingangsseitig über die Niederdruckleitungen mit demselben Kühl- und/oder Schmiermittel versorgt wird, wie es in dem Niederdruckkreislauf verwendet wird. Die Hochdruckpumpe setzt dieses zugeführte Kühl- und/oder Schmiermittel ausgangsseitig unter hohen Druck, typischerweise größer 1.000 bar, vorzugsweise ca. 1.500 bar. Von der Hochdruckpumpe aus wird das Kühl- und/oder Schmiermittel über Hochdruckleitungen und den besagten Hochdruckzulauf im Bereich maximaler Last in den Aufnahmeraum, genauer gesagt, in den Ringspalt zwischen Walzenzapfen und Einbaustück gepresst. Mit dem hohen Druck gelingt es, den Walzenzapfen und damit auch die Walze auch bei hohen Walzkräften von dem Einbaustück zu separieren und den Walzenzapfen auf einem Film, gebildet aus dem Kühl- und/oder Schmiermittel auch unter hoher Last quasi reibungsfrei gleiten zu lassen.

Die aus der besagten internationalen Patentanmeldung WO 2013/048836 A1 bekannte Anordnung der Hochdruckpumpe auf dem Walzgerüst ist jedoch aus verschiedenen Gründen nicht sinnvoll:
Zum einen sind die notwendigen Hochdruckleitungen zur Verbindung der oben auf dem Walzgerüst positionierten Hochdruckpumpe ausgangsseitig mit den Hochdruckzuläufen im Einbaustück noch relativ lang. Weiterhin ist ein externer Antrieb für die Hochdruckpumpe erforderlich, der auch oben auf dem Walzgerüst platziert werden müsste. Elektrische oder hydraulische Versorgungsleitungen für diesen Antrieb müssen oben auf das Walzgerüst geführt sein/werden.

Der Erfindung liegt die Aufgabe zugrunde, ein bekanntes Walzgerüst zum Walzen von Walzgut dahingehend weiterzubilden, dass die Kosten für den Antrieb der Hochdruckpumpe verringert werden können.

Diese Aufgabe wird durch den Gegenstand des Patentanspruchs 1 gelöst. Dieser ist dadurch gekennzeichnet, dass ein Getriebe vorgesehen ist, welches an der ballenfernen Seite des Einbaustücks angeordnet ist zum Drehkoppeln der Hochdruckpumpe mit dem in dem Aufnahmeraum drehbar gelagerten Walzenzapfen.

Das beanspruchte Getriebe bietet den Vorteil, dass die Hochdruckpumpe durch den Walzenzapfen angetrieben wird, wenn dieser sich dreht. Damit ist ein separater Antrieb, typischerweise ein Elektromotor für die Hochdruckpumpe entbehrlich; dessen Kosten sowie die Kosten für elektronische oder hydraulische Versorgungsleitungen für den Antrieb können eingespart werden.

Gemäß einem ersten Ausführungsbeispiel ist das Getriebe als Zahnradgetriebe ausgebildet, mit einem Ritzel und einem Treibrad, welche direkt oder indirekt miteinander drehgekoppelt sind. Das Ritzel ist drehfest auf die Antriebswelle der Hochdruckpumpe aufgesetzt oder das freie Ende der Antriebswelle ist selbst als Ritzel ausgebildet. Gemäß einer ersten Variante des Getriebes ist das Treibrad als außenverzahnter Zahnkranzring ausgebildet, welcher vorzugsweise an der ballenfernen Seite drehfest mit dem Walzenzapfen oder mit einer auf den Walzenzapfen drehfest aufgesetzten Zapfenbuchse verbunden ist. Die Hochdruckpumpe ist dann so angeordnet, dass das Ritzel ihrer Antriebswelle mit dem außenverzahnten Zahnkranzring vorzugsweise direkt, d. h. ohne Zwischenschaltung weiterer Zahnräder in Eingriff steht. Wenn eine bestimmte Übersetzung erforderlich ist, können selbstverständlich noch weitere Zahnräder zwischengeschaltet sein. Insbesondere bei der besagten ersten Variante des Getriebes kann die Hochdruckpumpe vorteilhafterweise platzsparend in eine Nische des Einbaustücks eingebaut sein.

Eine zweite Variante des Getriebes sieht vor, dass das Treibrad als innenverzahnter Zahnkranzring ausgebildet ist, welcher an der ballenfernen Stirnseite des Walzenzapfens drehfest und vorzugsweise koaxial mit diesem verbunden ist. Die Hochdruckpumpe ist dann an der Stirnseite des Walzenzapfens in axialer Richtung derart vorgelagert angeordnet, dass das Ritzel der Antriebswelle der Hochdruckpumpe mit dem innenverzahnten Zahnkranzring vorzugsweise direkt in Eingriff steht.

Der Ausdruck, dass das Ritzel direkt mit dem Treibrad in Eingriff steht, bedeutet, dass die Zähne des Ritzels in die Verzahnung des Treibrades eingreifen. Demgegenüber bedeutet ein indirektes in Eingriff stehen, dass das Ritzel und das Treibrad über eine Kette oder unter Zwischenschaltung weiterer Zahnräder oder auf sonstige Weise miteinander drehgekoppelt sind.

Neben dem Hochdruckzulauf ist in dem Aufnahmeraum des Einbaustücks auch mindestens ein Niederdruckzulauf vorgesehen, wobei der Niederdruckzulauf von einem Niederdruckkreislauf für das Kühl- und/oder Schmiermittel versorgt wird. Der Niederdruckkreislauf weist eine Niederdruckpumpe und mindestens eine Niederdruckleitung mit einer Verzweigung auf, um sowohl die Niederdruckzuläufe wie auch die Niederdruck-Eingangsseite der Hochdruckpumpe mit Kühl- und/oder Schmiermittel zu versorgen.

Die Abzweigung der Niederdruckleitung für den Niederdruckzulauf und die Hochdruckpumpe kann außerhalb des Einbaustücks angeordnet sein, dann vorzugsweise auf Höhe des Einbaustücks, unmittelbar an der an dem Ständer des Walzgerüstes entlanglaufenden Niederdruckleitung. In diesem Fall gehen zwei Niederdruckleitungen von der Verzweigung ab in das Einbaustück.

Alternativ kann die Verzweigung im Inneren des Einbaustücks realisiert sein. In diesem Fall führt lediglich eine einzige Niederdruckleitung von dem Niederdruckkreislauf in das Einbaustück hinein. Innerhalb des Einbaustücks verzweigt sich dann diese Leitung zu dem Niederdruckzulauf und dem Hochdruckzulauf. Diese zweite Variante für die Verzweigung bietet den Vorteil, dass, wie gesagt, lediglich eine Niederdruckleitung in das Einbaustück hineingeht und damit bei einem Walzenwechsel auch nur diese eine Leitung aufgetrennt bzw. angeschlossen werden muss. Die Gefahr, dass eine Leitung nach einem Walzenwechsel nicht wieder angekuppelt wird, wird dadurch verringert.

Wenn in dem Einbaustück eine Lagerbuchse als Verschleißteil vorgesehen ist zum Aufspannen des Aufnahmeraumes, dann sind sowohl die Niederdruck- wie auch die Hochdruckzuläufe für das Kühl- und/oder Schmiermittel in der Lagerbuchse ausgebildet. Diese Zuläufe stehen dann mit den entsprechenden Kanälen in dem Einbaustück in fluidleitender Verbindung.

Der Beschreibung sind sechs Figuren beigefügt, wobei
- Figur 1: ein Walzgerüst gemäß der Erfindung mit einer ersten Variante für den Anschluss der Hochdruckpumpe an die Niederdruckleitung und mit der Hochdruckpumpe an einer ersten Einbauposition;
- Figur 2: ein Walzgerüst gemäß der Erfindung gemäß einer zweiten Variante für den Anschluss der Hochdruckpumpe an die Niederdruckleitung und mit der Hochdruckpumpe an der ersten Einbauposition;
- Figur 3: einen Längsschnitt durch ein Einbaustück mit darin gelagertem Walzenzapfen mit einer ersten Variante des Getriebes zum Antreiben der Hochdruckpumpe an der ersten Einbauposition;
- Figur 4: ein Walzgerüst gemäß der Erfindung mit der ersten Variante für den Anschluss der Hochdruckpumpe an die Niederdruckleitung und mit der Hochdruckpumpe an einer zweiten Einbauposition;
- Figur 5: ein Walzgerüst gemäß der Erfindung gemäß der zweiten Variante für den Anschluss der Hochdruckpumpe an die Niederdruckleitung und mit der Hochdruckpumpe an der zweiten Einbauposition; und
- Figur 6: ein Längsschnitt durch das Einbaustück mit darin gelagertem Walzenzapfen mit der zweiten Variante des Getriebes zum Antreiben der Hochdruckpumpe an der zweiten Einbauposition
zeigt.

Die Erfindung wird nachfolgend unter Bezugnahme auf die genannten Figuren in Form von Ausführungsbeispielen bzw. Varianten detailliert beschrieben. In allen Figuren sind gleiche technische Merkmale mit gleichen Bezugszeichen bezeichnet.

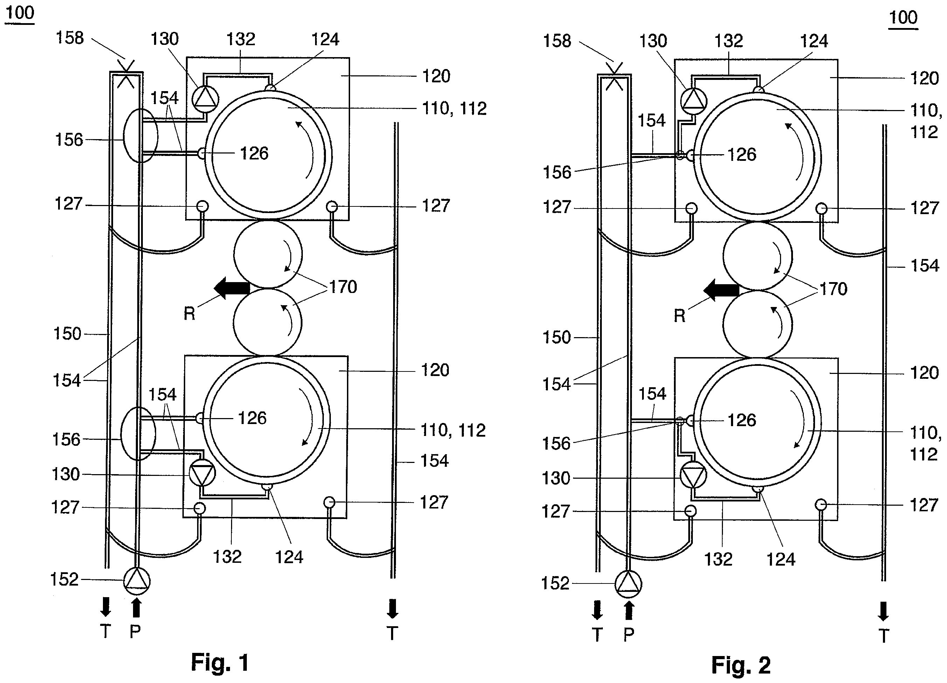

Figur 1 zeigt in schematisierter Form ein Walzgerüst gemäß der Erfindung in Quarto-Bauweise, d. h. mit vier übereinander angeordneten Walzen. Bei den beiden mittleren Walzen handelt es sich um Arbeitswalzen 170, welche typischerweise einen Walzspalt aufspannen, zwischen dem Walzgut in Walzrichtung R hindurch befördert und gewalzt wird. Die beiden Arbeitswalzen 170 werden abgestützt durch eine obere und eine untere Stützwalze 110. Die Stützwalzen sind mit ihren Walzenzapfen 112 in Einbaustücken 120 drehbar gelagert. Die Einbaustücke 120, auch Lagergehäuse genannt, weisen einen zylinderförmigen, eventuell auch konischen Aufnahmeraum 122 auf, in dem die jeweiligen Walzenzapfen 112 der Stützwalzen 110 drehbar gelagert sind. Optional kann der Aufnahmeraum 122 von einer Lagerbuchse 128 aufgespannt werden, welche in dem Einbaustück drehfest angeordnet ist. Zwischen dem Einbaustück 120 bzw. der Lagerbuchse 128 und dem Walzenzapfen 112 bzw. einer optional auf den Walzenzapfen aufgesetzten Zapfenbuchse ist ein Ringspalt ausgebildet, der im Betrieb des Walzgerüstes mit Kühl- und/oder Schmiermittel befüllt ist. Zur Versorgung des Ringspaltes mit dem Kühl- und/oder Schmiermittel sind an der Peripherie des Aufnahmeraumes 122 Zu- und Abläufe für das Kühl- und/oder Schmiermittel vorgesehen. Konkret ist im Bereich maximaler Last mindestens ein Hochdruckzulauf 124 angeordnet, über welchen das Kühl- und/oder Schmiermittel mit Hilfe einer Hochdruckpumpe 130 erforderlichenfalls unter hohem Druck, typischerweise größer 1.000 bar, vorzugsweise 1.500 bar in den Ringspalt hinein gepresst wird. Neben dem Hochdruckzulauf 124 gibt es mindestens einen Niederdruckzulauf 126, welcher typischerweise im Bereich einer 90°- bzw. 270°-Position angeordnet ist.

Um sowohl den besagten Niederdruckzulauf 126, wie auch die Eingangsseite der Hochdruckpumpe 130 mit dem Kühl- und/oder Schmiermittel zu versorgen, ist dem Walzgerüst 100 ein Niederdruckkreislauf 150 zugeordnet. Der Niederdruckkreislauf umfasst eine Niederdruckpumpe 152 zum Bereitstellen des Kühl- und/oder Schmiermittels mit niedrigem Druck, beispielsweise 1 bis 10 bar, vorzugsweise 2 bar. Die Niederdruckpumpe 152 pumpt das Kühl- und/oder Schmiermittel aus einem Tank, welcher sich typischerweise unterhalb des Walzgerüstes befindet, in eine Niederdruckleitung 154. Gemäß einer ersten Variante, wie sie in Figur 1 dargestellt ist, weist die Niederdruckleitung 154 auf Höhe jedes der Einbaustücke 120 außerhalb der Einbaustücke 120 eine Verzweigung auf, so dass von der Niederdruckleitung 154 zwei separate Niederdruckleitungen 154 in die jeweiligen Einbaustücke 120 geführt sind, um dort zum einen die Eingangsseite der Hochdruckpumpe 130 wie auch den Niederdruckzulauf 126 mit dem - unter niedrigem Druck stehenden - Kühl- und/oder Schmiermittel zu versorgen.

Ein Druckregler 158 sorgt für den notwendigen Vordruck in der Niederdruckleitung 154, die an den Einbaustücken angeschlossen sind.

Neben den Zuläufen 124, 126 sind in den Einbaustücken 120 auch Abläufe 127 zu erkennen, welche ihrerseits mit den in den Tank zurücklaufenden Niederdruckleitungen 154 leitungsverbunden sind.

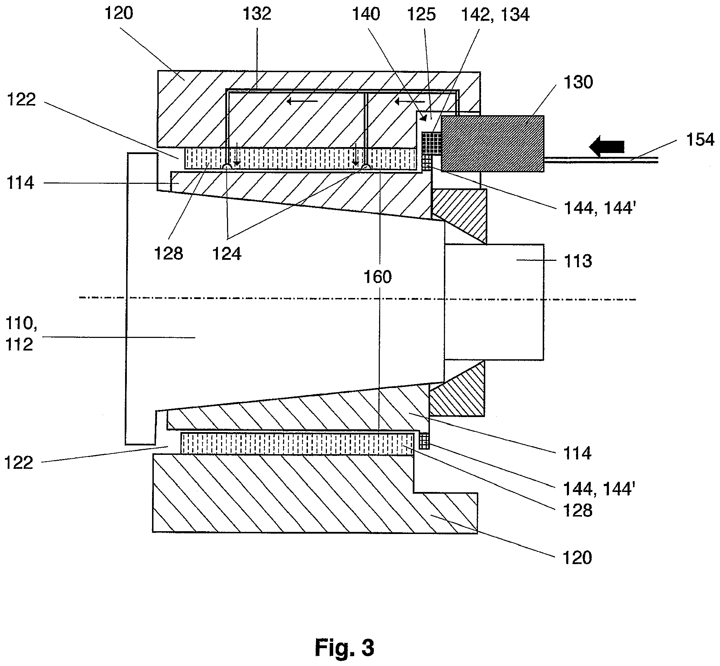

In Figur 1 ist zu erkennen, dass die Hochdruckpumpe 130 in bzw. zumindest im Bereich des Einbaustücks 120 angeordnet ist. Dies gilt sowohl für das Einbaustück der oberen Stützwalze wie auch für das Einbaustück der unteren Stützwalze. Erfindungsgemäß wird die Hochdruckpumpe 130 von dem Walzenzapfen 112 der Stützwalze 110 mit angetrieben, wenn dieser sich dreht. Details zu diesem erfindungsgemäßen Drehantrieb sind weiter unten unter Bezugnahme auf Figur 3 beschrieben.

Figur 2 zeigt im Wesentlichen dasselbe Walzgerüst 100, wie soeben unter Bezugnahme auf Figur 1 beschrieben. Der einzige Unterscheid besteht darin, dass Figur 2 eine zweite Variante für den Anschluss des Einbaustücks 120 und insbesondere der Hochdruckpumpe 130 an die Niederdruckleitung 154 aufzeigt. Konkret sieht diese zweite Variante vor, dass nicht zwei Niederdruckleitungen 154, sondern lediglich eine einzige Niederdruckleitung 154 in das Einbaustück 120 hineingeführt ist und dass sich innerhalb des Einbaustücks eine Verzweigung 156 befindet, von der aus eine Niederdruckleitung für das Kühl- und/oder Schmiermittel an den Niederdruckzulauf 126 und die Eingangsseite der Hochdruckpumpe 130 abzweigt. Das Vorsehen von lediglich einem Niederdruckzugang pro Einbaustück 120 spart nicht nur die Mehrkosten für die einmalige Montage der zweiten Niederdruckleitung, sondern auch die Folgekosten, welche entstehen, wenn bei jedem Wechsel der Stützwalzen nicht nur eine, sondern zwei Niederdruckleitungen von dem Einbaustück abgetrennt und bei Einbau der neuen Walzen wieder angeschlossen werden müssen.

Figur 3 zeigt einen Längsschnitt durch ein Einbaustück 120 mit darin gelagertem Walzenzapfen 112 einer Stützwalze 110 mit einer ersten Variante des erfindungsgemäßen Getriebes zwischen der Hochdruckpumpe und dem Walzenzapfen. Konkret ist zu erkennen, dass die Hochdruckpumpe 130 in einer Nische 125 des Einbaustücks 120 derart eingebaut ist, dass ihre Antriebswelle 134 vorzugsweise parallel zur Längsachse der Stützwalze 110 ausgerichtet ist. Das nach außen vorstehende freie Ende der Antriebswelle 134 ist vorzugsweise seinerseits als Zahnrad ausgebildet oder es ist ein Ritzel 142 drehfest auf diese Antriebswelle montiert. Bei der in Figur 3 gezeigten ersten Variante des Getriebes steht das Ritzel 142 bzw. das antriebswellenseitige Zahnrad in direktem Eingriff mit einem außenverzahnten Zahnkranzring 144' eines Treibrades 144, welches koaxial an der ballenfernen Seite auf dem Walzenzapfen oder einer auf den Walzenzapfen aufgesetzten Zapfenbuchse 114 drehfest montiert ist. Das Getriebe 140 besteht deshalb im vorliegenden Fall aus dem Ritzel 142 und dem Treibrad 144 mit außenverzahntem Zahnkranzring 144', welche direkt miteinander in Eingriff stehen. Alternativ könnte das Getriebe 140 auch eine indirekte Kopplung von Ritzel und Treibrad vorsehen, z. B. über eine Kette oder zwischengeschaltete weitere Getrieberäder. Der gezeigte Einbau der Hochdruckpumpe 130 in die Nische 125 des Einbaustücks 120 stellt eine sehr kompakte Bauweise dar, was den grundsätzlich immer recht beengten Raumverhältnissen im Umfeld von Walzgerüsten sehr entgegenkommt.

In Figur 3 ist zu erkennen, dass die Hochdruckpumpe 130 eingangsseitig an die Niederdruckleitung 154 angeschlossen ist. Ausgangsseitig pumpt die Hochdruckpumpe 130 das Kühl- und/oder Schmiermittel über Hochdruckleitungen 132 an die Hochdruckzuläufe 124 in dem Ringspalt zwischen der Lagerbuchse 128 und der Zapfenbuchse 114. Die Hochdruckleitungen 132 sind im Inneren des Einbaustücks 120 ausgebildet.

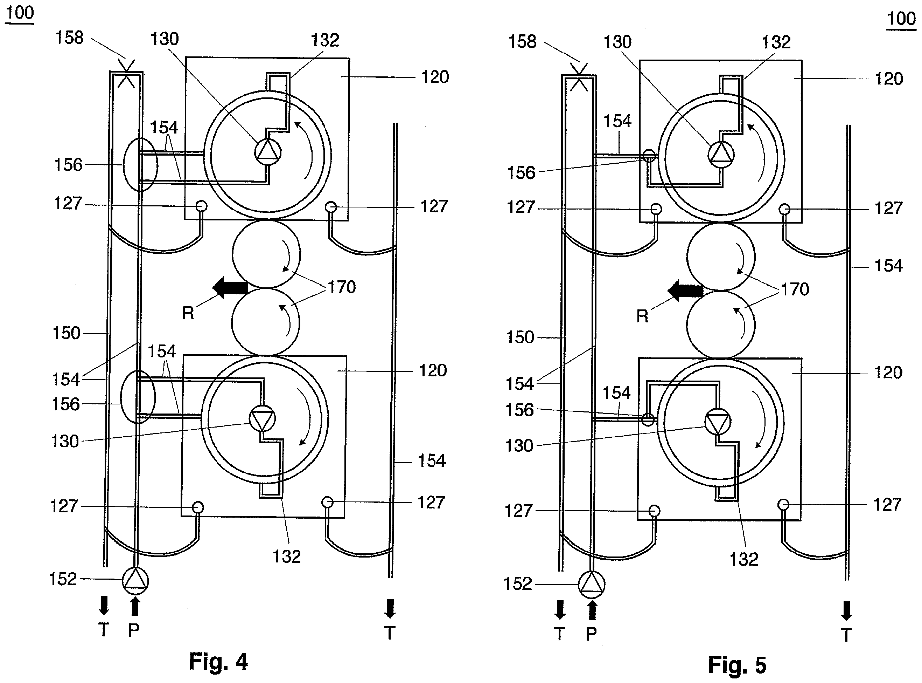

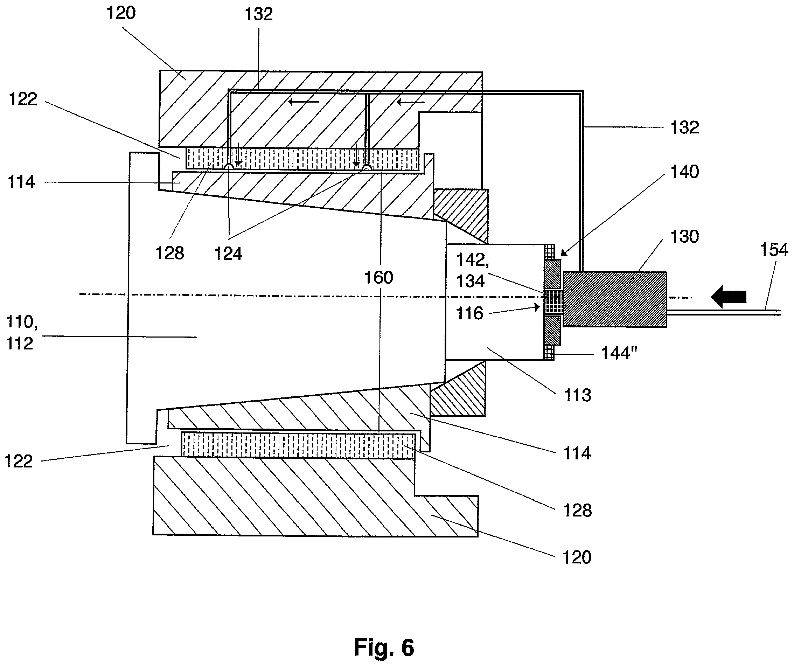

Figur 4 entspricht im Wesentlichen Figur 1 mit dem einzigen Unterschied, dass die Hochdruckpumpe anders positioniert ist, nämlich an der Stirnseite des Walzenzapfens 112 der Stützwalze 110, wie dies weiter unten in Figur 6 detailliert beschrieben ist.

Figur 5 entspricht im Wesentlichen der Figur 2 mit dem einzigen Unterschied, dass hier die Hochdruckpumpe 130 ebenfalls anders positioniert ist, nämlich an der Stirnseite des Walzenzapfens; siehe auch hierzu die nachfolgende Beschreibung der Figur 6.

Figur 6 zeigt einen Längsschnitt durch das Einbaustück 120 mit dem darin gelagerten Walzenzapfen 112 der Stützwalze 110. Im Unterschied zu Figur 3 ist hier die Hochdruckpumpe 130, wie in den Figuren 4 und 5 gezeigt, an der ballenfernen Stirnseite des Walzenzapfens 112 angeordnet. Das Ritzel 142 auf der Antriebswelle 134 der Hochdruckpumpe ist hier über das Treibrad 144 mit innenverzahntem Zahnkranzring 144" direkt mit dem Walzenzapfen 112 drehgekoppelt. Das Treibrad ist vorzugsweise konzentrisch auf der Stirnseite des Walzenzapfens 112 drehfest montiert.

### Bezugszeichenliste

- 100: Walzgerüst
- 110: Stützwalze
- 112: Walzenzapfen der Stützwalze
- 113: Walzenzapfenende
- 114: Zapfenbuchse
- 116: ballenferne Stirnseite des Walzenzapfens
- 120: Einbaustück
- 122: Aufnahmeraum
- 124: Hochdruckzulauf
- 125: Nische im Einbaustück
- 126: Niederdruckzulauf
- 127: Ablauf
- 128: Lagerbuchse
- 130: Hochdruckpumpe
- 132: Hochdruckleitung
- 134: Antriebswelle der Hochdruckpumpe
- 140: Getriebe
- 142: Ritzel
- 144: Treibrad
- 144': außenverzahnter Zahnkranzring
- 144": innenverzahnter Zahnkranzring
- 150: Niederdruckkreislauf
- 152: Niederdruckpumpe
- 154: Niederdruckleitung
- 156: Verzweigung
- 158: Druckregler
- 160: Ringspalt
- 170: Arbeitswalzen
- T: Niederdruckrückleitung vom Walzgerüst in den Tank
- P: Niederdruckhinleitung vom Tank zum Walzgerüst
- R: Walzrichtung

## Patentansprüche

1. Walzgerüst (100) zum Walzen von vorzugsweise metallischem Walzgut; aufweisend:
eine Walze (110) mit zwei Walzenzapfen (112);
zwei Einbaustücke (120) mit jeweils einem zylinderförmigen Aufnahmeraum (122) zur drehbaren Lagerung eines der Walzenzapfen (112) der Walze (110),
wobei der Aufnahmeraum in mindestens einem der Einbaustücke (120) im Bereich maximaler Last mindestens einen Hochdruckzulauf (124) für Kühl- und/oder Schmiermittel aufweist;
mindestens eine dem mindestens einen Einbaustück (120) zugeordnete Hochdruckpumpe (130), und
Hochdruckleitungen (132) zum Verbinden der Ausgangsseite der Hochdruckpumpe (130) mit dem Hochdruckzulauf (124) zum Zuführen des Kühl- und/oder Schmiermittels in den Aufnahmeraum (122);
**gekennzeichnet durch**
ein Getriebe (140), welches an der ballenfernen Seite des Einbaustücks (120) angeordnet ist, zum Drehkoppeln der Hochdruckpumpe (130) mit dem in dem Aufnahmeraum (122) drehbar gelagerten Walzenzapfen (112).

2. Walzgerüst (100) nach Anspruch 1,
**dadurch gekennzeichnet, dass**
das Getriebe (140) als Zahnradgetriebe ausgebildet ist mit einem Ritzel (142) und einem Treibrad (144), welche direkt oder indirekt miteinander drehgekoppelt sind; und
das Ritzel (142) drehfest auf die Antriebswelle (134) der Hochdruckpumpe (130) aufgesetzt ist oder das freie Ende der Antriebswelle (134) als das Ritzel ausgebildet ist.

3. Walzgerüst (100) nach Anspruch 2,
**dadurch gekennzeichnet, dass**
das Treibrad (144) als außenverzahnter Zahnkranzring ausgebildet ist, welcher vorzugsweise an der ballenfernen Seite drehfest mit dem Walzenzapfen (112) oder mit einer auf den Walzenzapfen drehfest aufgesetzten Zapfenbuchse (114) verbunden ist; und
die Hochdruckpumpe (130) so angeordnet ist, dass das Ritzel ihrer Antriebswelle (134) mit dem außenverzahnten Zahnkranzring, vorzugsweise direkt, in Eingriff steht.

4. Walzgerüst (100) nach Anspruch 2,
**dadurch gekennzeichnet, dass**
das Treibrad (144) als innenverzahnter Zahnkranzring ausgebildet ist, welcher an der ballenfernen Stirnseite (116) des Walzenzapfens (112) drehfest mit dem Walzenzapfen verbunden ist, wobei die Hochdruckpumpe (130) an der Stirnseite des Walzenzapfens derart vorgelagert angeordnet ist, dass das Ritzel (142) ihrer Antriebswelle (134) mit dem innenverzahnten Zahnkranzring, vorzugsweise direkt, in Eingriff steht.

5. Walzgerüst (100) nach einem der vorangegangenen Ansprüche,
**dadurch gekennzeichnet, dass**
die Hochdruckpumpe (130) in das Einbaustück (120) integriert, beispielsweise in eine Nische (125) des Einbaustücks eingebaut, ist.

6. Walzgerüst (100) nach einem der vorangegangenen Ansprüche,
**dadurch gekennzeichnet, dass**
das Einbaustück (120) neben dem Hochdruckzulauf (124) auch mindestens einen Niederdruckzulauf (126) für das Kühl- und/oder Schmiermittel in den Aufnahmeraum (122) aufweist; und
ein Niederdruckkreislauf (150) vorhanden ist, welcher eine Niederdruckpumpe (152) und mindestens eine Niederdruckleitung (154) mit einer Verzweigung (156) aufweist zum Bereitstellen des Kühl- und/oder Schmiermittels mit niedrigem Druck, beispielsweise 1-10 bar, sowohl für den Niederdruckzulauf (126) wie auch für die Eingangsseite der Hochdruckpumpe (130).

7. Walzgerüst (100) nach Anspruch 6,
**dadurch gekennzeichnet, dass**
die Verzweigung (156) außerhalb des Einbaustücks (120), vorzugsweise auf Höhe des Einbaustücks, an der am Ständer des Walzgerüstes entlanglaufenden Niederdruckleitung (154) vorgesehen ist.

8. Walzgerüst (100) nach Anspruch 6,
**dadurch gekennzeichnet, dass**
lediglich eine einzige Niederdruckleitung (154) in das Einbaustück (120) hineingeführt ist; und
die Verzweigung (156) zu dem Niederdruckzulauf (126) und zu dem Hochdruckzulauf (124) innerhalb des Einbaustücks (120) ausgebildet ist.

9. Walzgerüst (100) nach einem der vorangegangenen Ansprüche,
**dadurch gekennzeichnet, dass**
das mindestens ein Einbaustück (120) eine drehfest angeordnete Lagerbuchse (128) aufweist, welche den Aufnahmeraum (122) aufspannt, wobei der mindestens eine Niederdruck- und Hochdruckzulauf (124, 126) für das Kühl- und/Schmiermittel in den Aufnahmeraum in der Lagerbuchse (128) ausgebildet ist.

10. Walzgerüst nach einem der vorangegangenen Ansprüche,
**dadurch gekennzeichnet, dass**
jedem Hochdruckzulauf des Einbaustücks eine einzige Hochdruckpumpe individuell zugeordnet ist.

## Claims

1. Roll stand (100) for rolling preferably metallic rolling material, comprising:
a roll (110) with two roll pins (112);
two chocks (120) each with a respective cylindrical receiving space (122) for rotatable mounting of one of the roll pins (112) of the roll (110),
wherein the receiving space in at least one of the chocks (120) has in the region of maximum load at least one high-pressure feed (124) for coolant and/or lubricant;
at least one high-pressure pump (130) associated with the at least one chock (120); and
high-pressure lines (132) for connecting the output side of the high-pressure pump (130) with the high-pressure feed (124) for the feed of coolant and/or lubricant to the receiving space (122);
**characterised by**
a transmission (140), which is arranged at the side of the chock (120) remote from the roll barrel, for rotational coupling of the high-pressure pump (130) with the roll pin (112) rotatably mounted in the receiving space (122).

2. Roll stand (100) according to claim 1,
**characterised in that**
the transmission (140) is constructed as a gearwheel transmission with a pinion (142) and a drive wheel (144), which are directly or indirectly rotationally coupled with one another; and
the pinion (142) is placed on the drive shaft (134) of the high-pressure pump (130) to be secure against relative rotation or the free end of the drive shaft (134) is constructed as a pinion.

3. Roll stand (100) according to claim 2,
**characterised in that**
the drive wheel (144) is constructed as an externally toothed rim gear which is connected preferably at the side remote from the roll barrel with the roll pin (112) or a pin bush (114), which is fitted on the roll pin to be rotationally fixed, to be secure against rotation relative thereto; and
the high-pressure pump (130) is so arranged that the pinion is disposed by its drive shaft (134) in engagement, preferably direct engagement, with the externally toothed rim gear.

4. Roll stand (100) according to claim 2,
**characterised in that**
the drive wheel (144) is constructed as an internally toothed rim gear which is connected at the end (116) of the roll pin (112) remote from the roll barrel with the roll pin to be secure against rotation relative thereto, wherein the high-pressure pump (130) is arranged at the end of the roll pin to be pre-mounted in such a way that the pinion (142) is disposed by its drive shaft (134) in engagement, preferably direct engagement, with the internally toothed rim gear.

5. Roll stand (100) according to any one of the preceding claims,
**characterised in that**
the high-pressure pump (130) is integrated in the chock (120), for example installed in a niche (124) of the chock.

6. Roll stand (100) according to any one of the preceding claims,
**characterised in that**
the chock (120) also has in addition to the high-pressure feed (124) at least one low-pressure feed (126) for the coolant and/or lubricant to the receiving space (122); and
a low-pressure circuit (150) is present, the circuit comprising a low-pressure pump (152) and at least one low-pressure line (154) with a branch (156) for providing the coolant and/or lubricant at low pressure, for example 1 to 10 bars, not only for the low-pressure feed (126), but also for the inlet side of the high-pressure pump (130).

7. Roll stand (100) according to claim 6,
**characterised in that**
the branch (156) is provided outside the chock (120), preferably at the level of the chock, at the low-pressure line (154) running along the housing of the roll stand.

8. Roll stand (100) according to claim 6,
**characterised in that**
merely a single low-pressure line (154) is led into the chock (120); and
the branch (156) to the low-pressure feed (126) and to the high-pressure feed (124) is formed within the chock (120).

9. Roll stand (100) according to any one of the preceding claims,
**characterised in that**
the at least one chock (120) comprises a bearing bush (128) which is arranged to be secure against relative rotation and which spans the receiving space (122),
wherein the at least one low-pressure feed (124) and high-pressure feed (126) for the coolant and/or lubricant to the receiving space are formed in the bearing bush (128).

10. Roll stand according to any one of the preceding claims,
**characterised in that**
a single high-pressure pump is individually associated with each high-pressure feed of the chock.

## Revendications

1. Cage de laminoir (100) pour le laminage d'un produit de laminage de préférence métallique, présentant :
un cylindre (110) comprenant deux tourillons de cylindre (112) ;
deux empoises (120) comprenant respectivement un espace de réception de forme cylindrique (122) pour le montage rotatif d'un des tourillons de cylindre (112) du cylindre (110) ;
dans laquelle l'espace de réception, dans au moins une des empoises (120), présente, dans la zone de la charge maximale, au moins une entrée pour la haute pression (124) destinée à un agent de refroidissement et/ou à un lubrifiant ;
au moins une pompe haute pression (130) attribuée à ladite au moins une empoise (120) ; et
des conduits (132) pour la haute pression destinés à relier le côté sortie de la pompe haute pression (130) à l'entrée pour la haute pression (124) dans le but d'acheminer l'agent de refroidissement et/ou le lubrifiant dans l'espace de réception (122) ;
**caractérisée par**
une transmission (140), qui est disposée du côté de l'empoise (120) éloigné du corps de cylindre, pour le couplage rotatif de la pompe haute pression (130) au tourillon de cylindre (112) monté en rotation dans l'espace de réception (122).

2. Cage de laminoir (100) selon la revendication 1, **caractérisée en ce que**
la transmission (140) est réalisée sous la forme d'un engrenage du type à roues dentées comprenant un pignon (142) et une roue motrice (144), qui sont couplés l'un à l'autre en rotation de manière directe ou de manière indirecte ; et
le pignon (142) est monté en antirotation sur l'arbre d'entraînement (134) de la pompe haute pression (130) ou bien l'extrémité libre de l'arbre d'entraînement (134) est réalisée sous la forme du pignon en question.

3. Cage de laminoir (100) selon la revendication 2, **caractérisée en ce que**
la roue d'entraînement (144) est réalisée sous la forme d'un anneau en forme de couronne dentée du type à denture externe, qui est relié de préférence du côté éloigné du corps de cylindre en antirotation au tourillon de cylindre (112) ou à une douille de tourillon (114) montée en antirotation sur le tourillon de cylindre ; et
la pompe haute pression (130) est disposée d'une manière telle que le pignon de son arbre d'entraînement (134) vient s'engrener, de préférence de manière directe, avec l'anneau en forme de couronne dentée du type à denture externe.

4. Cage de laminoir (100) selon la revendication 2, **caractérisée en ce que**
la roue d'entraînement (144) est réalisée sous la forme d'un anneau en forme de couronne dentée du type à denture interne, qui est relié, au côté avant (116) du tourillon de cylindre (112), éloigné du corps de cylindre, en antirotation au tourillon de cylindre ;
dans lequel la pompe haute pression (130) est disposée en amont, sur le côté avant du tourillon de cylindre, d'une manière telle que le pignon (142) de son arbre d'entraînement (134) vient s'engrener, de préférence de manière directe, avec l'anneau en forme de couronne dentée du type à denture interne.

5. Cage de laminoir (100) selon l'une quelconque des revendications précédentes, **caractérisée en ce que**
la pompe haute pression (130) est intégrée dans l'empoise (120), par exemple est incorporée dans une niche (125) de l'empoise.

6. Cage de laminoir (100) selon l'une quelconque des revendications précédentes, **caractérisée en ce que**
l'empoise (120) présente, à côté de l'entrée pour la haute pression (124), également au moins une entrée pour la basse pression (126) destinée à l'agent de refroidissement et/ou au lubrifiant dans l'espace de réception (122) ; et
est présent un circuit de basse pression (150) qui présente une pompe basse pression (152) et au moins un conduit (154) pour la basse pression comprenant une ramification (156) pour la mise à disposition de l'agent de refroidissement et/ou du lubrifiant soumis à une basse pression, par exemple de 1 à 10 bar, aussi bien pour l'entrée destinée à la basse pression (126) que pour le côté entrée de la pompe haute pression (130).

7. Cage de laminoir (100) selon la revendication 6, **caractérisée en ce que**
la ramification (156) est prévue à l'extérieur de l'empoise (120), de préférence à hauteur de l'empoise, contre le conduit (154) pour la basse pression qui s'étend le long du bâti de la cage de laminoir.

8. Cage de laminoir (100) selon la revendication 6, **caractérisée en ce que**
uniquement un seul conduit (154) pour la basse pression est guidé au sein de l'empoise (120) ; et
la ramification (156) menant à l'entrée (126) pour la basse pression et à l'entrée (124) pour la haute pression est réalisée à l'intérieur de l'empoise (120).

9. Cage de laminoir (100) selon l'une quelconque des revendications précédentes, **caractérisée en ce que**
au moins une empoise (120) présente une douille de palier (128) montée en antirotation, qui enserre l'espace de réception (122) ; dans laquelle lesdites au moins une entrée (124, 126) pour la basse pression et pour la haute pression destinées à l'agent de refroidissement et/ou au lubrifiant sont réalisées dans l'espace de réception dans la douille de palier (128).

10. Cage de laminoir selon l'une quelconque des revendications précédentes, **caractérisée en ce qu'**à chaque entrée de l'empoise pour la haute pression, est attribuée de manière individuelle une seule pompe haute pression.
